# FASCICULE DE BREVET EUROPEEN

(11) **EP 1 239 943 B1**
(45) Date de publication et mention de la délivrance du brevet: **26.11.2003**
(21) Numéro de dépôt: 00974574.6
(22) Date de dépôt: 26.10.2000
(51) Int. Cl.: B01D 65/08, C02F 1/44, C02F 1/52

(54) **PERFECTIONNEMENTS APPORTES A LA FILTRATION SUR MEMBRANES**
VERBESSERTE MEMBRANENFILTRATION
IMPROVED MEMBRANE FILTRATION

(30) Priorité: 09.12.1999 FR 9915551
(43) Date de publication de la demande: 18.09.2002
(73) Titulaire: ONDEO DEGREMONT, 92500 Rueil-Malmaison (FR)
(72) Inventeur: LANGLAIS, Chrystelle, F-78230 Le Pecq (FR)
(74) Mandataire: Armengaud Ainé, Alain
(86) Numéro de dépôt international: FR0002991
(87) Numéro de publication internationale: WO01041906

(56) Documents cités:
- EP-A- 0 273 335
- WO-A-98/46533
- DE-A- 4 112 391
- US-A- 4 014 787
- US-A- 5 198 116
- US-A- 5 871 648

## Description

La présente invention concerne des perfectionnements apportés à la filtration sur membranes d'effluents contenant des matières en suspension, notamment de l'eau, en vue de réduire ou d'éviter le colmatage des membranes et d'améliorer la capacité de filtration de celles-ci.

On sait que les membranes de filtration (micro-, ultra-, nano-, ou hyperfiltration) sont sensibles au colmatage par différents types de substances : substances dissoutes comme les matières organiques, substances à l'état colloïdal comme les hydroxydes métalliques ou, en général, substances en suspension (en abrégé MeS, Matières en Suspension). Le colmatage conduit à une réduction très importante de la capacité de filtration de la membrane, la baisse de capacité n'étant pas toujours réversible. l'efficacité des nettoyages de membranes dépendant considérablement de divers facteurs, tels que le temps de résidence effectif du produit encrassant sur la membrane, sa solubilité relative dans les produits de nettoyage et les interactions chimiques ou physico-chimiques entre ledit produit encrassant et la surface de la membrane, ce dernier facteur étant éminemment variable en fonction de la composition chimique du polymère constituant la membrane.

Il est en outre connu (voir notamment le « Mémento Technique de l'Eau » Tome 1, chapitre 3.1 et chapitre 4.1 - Edité par DEGREMONT 1989) que la coagulation facilite l'élimination des matières en suspension et colloïdales. En particulier l'homme de l'art sait que la coagulation par des sels métalliques permet de déstabiliser les colloïdes, de précipiter certaines matières organiques après adsorption, par exemple sur des hydroxydes métalliques. Pour caractériser ce phénomène il y a plusieurs approches :
. par essai de coagulation-floculation en bécher de laboratoire avec différentes doses de sel métallique et estimation, par exemple, des vitesses de décantation.
. par mesure du potentiel Zéta (pZ) et surtout de l'évolution dudit pZ, en fonction des doses de sel métallique ajoutées, jusqu'à déterminer la dose qui annule le pZ et qui correspond donc au taux de traitement requis pour obtenir une coagulation optimale.

Ces deux approches conduisent à définir une dose de coagulant, dite « dose optimale de coagulation », qui selon l'expérience acquise par l'homme de l'art est la dose qui permet le meilleur traitement de clarification de l'eau en cours de traitement et qui, par conséquent va assurer les meilleures conditions de travail pour la membrane (c'est-à-dire les conditions les moins encrassantes).

L'inconvénient d'un traitement mettant en oeuvre cette dose optimale de coagulation est que cette dose est relativement élevée et se répercute sur le coût opératoire du traitement de clarification, et aussi sur le coût d'investissement des équipements correspondants.

Par ailleurs, il faut noter que la plupart des fournisseurs de membranes, de nanophiltration et d'osmose inverse, imposent, sous peine de déchéance des garanties attachées aux membranes, de ne les alimenter qu'avec une eau exempte ou, tout au moins, à très faible teneur en métaux lourds, bi- ou trivalents, tels que les ions ferriques, en particulier.

C'est ainsi que, dans la littérature, de nombreuses publications évoquent l'utilisation ou l'injection de sel(s) métallique(s) en amont des traitements sur membranes. Il est à souligner que ces publications mentionnent des doses proches de celle annulant le pZ ou, tout au moins des doses élevées, avoisinant 30 % et plus de la dose dite optimale pour annuler ledit pZ.

La présente invention s'est fixée pour objectif d'apporter un procédé permettant de minimiser ou à tout le moins de réduire le colmatage des membranes et d'en améliorer la capacité de filtration tout en renforçant l'économie du procédé. Pour parvenir à ce résultat les problèmes techniques à résoudre sont les suivants :
. augmenter notablement le flux spécifique de production (l.h⁻¹.m⁻² de membrane) ;
. produire un minimum de boues (d'hydroxydes par exemple) résultant du traitement de clarification et surtout,
. réduire la surface de membranes à installer pour traiter un même volume d'eau.

La titulaire a constaté, de façon réellement surprenante pour l'homme de l'art, qu'une dose de réactif de coagulation très inférieure à la dose qui annule le potentiel Zéta de l'eau à traiter, permettait d'améliorer considérablement la capacité de filtration de la membrane.

Cette invention a donc pour objet des perfectionnements apportés à la filtration sur membranes, notamment de micro-, ultra-, nano- ou hyperfiltration d'effluents concentrant des matières en suspension, notamment de l'eau, en vue de réduire le colmatage des membranes et d'en améliorer la capacité de filtration, caractérisés en ce qu'ils consistent à ajouter à l'effluent à filtrer, avant son passage sur les membranes. une dose d'un réactif de coagulation déstabilisant les matières colloïdales en suspension, qui est de l'ordre de 30 à 80 fois inférieure à la dose annulant le potentiel Zéta.

Selon un mode de mise en oeuvre avantageux du procédé selon l'invention ladite dose de réactif de coagulation est de l'ordre de 40 à 60 fois inférieure à celle annulant le potentiel Zéta.

Le domaine d'application de l'invention est particulièrement large. On peut en effet l'utiliser notamment pour traiter sur membranes des eaux d'origines diverses telles que par exemple :
- des eaux résiduaires urbaines, après un traitement biologique et une séparation permettant d'obtenir moins de 20 mg/l de MeS;
- des eaux ne nécessitant pas d'élimination préalable des matières organiques et dont la teneur en Carbone Organique Total (COT) est inférieure à 2 mg/l;
- des eaux brutes de surface, à faible COT et forte charge colloïdale et contenant moins de 200 mg/l de MeS.

Le procédé selon l'invention donne d'excellents résultats lorsqu'il est appliqué à des membranes de différentes formes (capillaires, tubulaires, planes, en spirales) à peau interne ou externe, présentant des configurations variées (en carter. sans carter et immergées dans un bassin). L'invention convient également aux applications relevant de l'arrosage de zones récréatives, de la réutilisation d'eaux usées dans des usines et de manière plus générale, au prétraitement en amont d'installations de dessalement par osmose inverse.

D'autres caractéristiques et avantages de la présente invention ressortiront de la description faite ci-après en référence au dessin annexé et aux exemples de mise en oeuvre donnés ci-après. Sur le dessin:
- la figure 1 est une vue schématique illustrant l'injection de réactif coagulant, par exemple un sel métallique, notamment un sel de fer, devant une membrane en carter en circulation et
- la figure 2 est une vue également schématique illustrant l'injection du réactif coagulant devant une membrane sans carter, immergée.

Sur les deux figures on a désigné les éléments identiques ou similaires par les mêmes références.

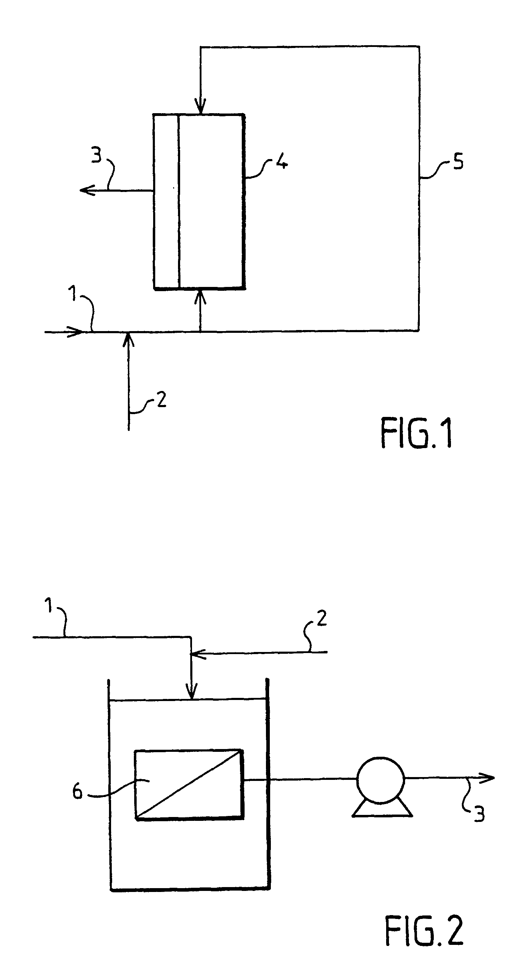

Dans le mode de mise en oeuvre représenté sur la figure 1, le réactif coagulant est injecté en 2 dans l'eau à traiter 1 et le mélange eau à traiter-réactif coagulant est filtré sur la membrane en carter 4. Le système comporte une boucle de recirculation 5. La référence 3 désigne la sortie de l'eau traitée.

Dans l'exemple de mise en oeuvre illustré par la figure 2 le réactif coagulant 2 est injecté dans l'eau à traiter 1, le mélange étant ensuite filtré sur la membrane 6, sans carter, immergée dans un bassin contenant l'eau à traiter. L'eau traitée 3 est évacuée à l'aide d'une pompe.

On a donné ci-après deux exemples chiffrés de mise en oeuvre de façon à faire ressortir les effets techniques et avantages apportés par la présente invention.

### Exemple 1 : Traitement d'eau résiduaire urbaine

On a effectué un essai en traitement biologique d'une eau résiduaire urbaine issue d'un bioréacteur à membrane textile tel que décrit dans FR-A-2775911.

La qualité de l'eau en sortie du réacteur était la suivante :

| | |
|---|---|
| DCO totale : | 40 mg/l |
| DBO5 totale | < 10 mg/l |
| MeS | 5 mg/l |
| COT | 6 mg/l |

En essai de laboratoire la dose qui annule le potention Zéta (pZ) est de 140 mg/l de FeCl₃ (exprimée en Fe Cl₃ pur). La dose optimale de réactif coagulant, évaluée en floculation en becher pour réduire les matières organiques (évaluées par l'absorption en UV à 254 nm) est de 110 mg/l.

Le débit d'eau traitée issue du réacteur à membrane textile était de 1 m³/h. Le flux stabilisé au travers de la membrane capillaire d'ultrafiltration était de 32 l.h⁻¹.m⁻². Lorsqu'on a utilisé une faible quantité de réactif coagulant. en injectant en ligne 3 mg/l de Fe Cl₃ (exprimé en Fe Cl₃ pur) le flux stabilisé s'est établi à 100 l.h⁻¹.m⁻².

Le rétrolavage a été effectué avec 5 mg/l de chlore pendant 30 secondes toutes les 30 minutes et, de temps en temps, par exemple une fois par mois, avec de l'acide citrique ammoniacal. Les eaux de rétrolavage étaient ramenées en tête du réacteur biologique à membrane textile.

Dans cet exemple, pour traiter 1 m³/h, sans réactif coagulant, on a obtenu 35 l.h⁻¹.m⁻² et on a donc besoin de 28,5 m² de surface de membrane. Par contre, en injectant 3 mg/l de Fe Cl₃ on obtient 100 l.h⁻¹.m⁻² et on a alors besoin de 10 m² de surface de membrane. Ceci représente une amélioration de flux de 285 % et une économie de 18,5 m² soit 65% de membrane en moins.

La production de boue a été évaluée à environ 8 mg/l avec 3 mg/l de Fe Cl₃ au lieu de 5 mg/l sans addition de réactif coagulant, mais elle reste cependant très inférieure à la production qui serait obtenue avec 125 mg/l de Fe Cl₃ soit plus de 90 mg/l de boue formée.

Il est clair que l'expérience rapportée ci-dessus et les résultats qu'elle permet d'obtenir vont à l'encontre de l'expérience de l'homme de l'art et des enseignements qu'il peut tirer de l'état antérieur de la technique. En effet :
- l'augmentation de flux d'une membrane, par clarification incomplète (avec une dose de coagulant nettement inférieure à la dose optimale de clarification) et
- l'utilisation d'agents coagulants (notamment sel férrique) en petites quantités mais quand même très supérieures aux teneurs habituellement prohibées par la grande majorité des fabricants et fournisseurs de membranes, sont en parfaite contradiction avec les routines d'utilisation de membranes communément admises.

Il résulte de la lecture de la description faite ci-dessus que l'invention permet effectivement de limiter le colmatage des membranes en améliorant considérablement la capacité de filtration de celles-ci, ce qui se traduit par des avantages économiques très importants, notamment une diminution de la surface de membrane à installer pour traiter un même volume d'eau.

Il demeure bien entendu que cette invention n'est pas limitée aux exemples de mise en oeuvre et/ou d'application mentionnée et/ou décrits ici mais qu'elle en englobe toutes les variantes.

## Revendications

1. Methode de filtration sur membranes, notamment de micro-, ultra-, nano-, ou hyperfiltration d'effluents contenant des matières en suspension, notamment de l'eau, en vue de réduire le colmatage des membranes et d'améliorer la capacité de filtration de celles-ci, **caractérisée en ce qu'**ils consistent à ajouter à l'effluent, avant son passage sur ladite membrane, une dose d'un réactif de coagulation déstabilisant les matières colloïdales en suspension, qui est de l'ordre de 30 à 80 fois inférieure à la dose de reactif de coagulation annulant le potentiel Zéta.

2. Méthode, **caractérisée en ce que** ladite dose est de l'ordre de 40 à 60 fois inférieure à celle annulant le potentiel Zéta.

## Patentansprüche

1. Verfahren zur Membranfiltration, insbesondere zur Mikro-, Ultra-, Nano- oder Hyperfiltration von Ausflüssen, die in Suspension befindliche Materien enthalten, insbesondere von Wasser, zum Reduzieren der Verschlammung der Membranen und zum Verbessern von deren Filtrationskapazität, **dadurch gekennzeichnet, dass** dem Ausfluss, bevor er die besagte Membran anströmt, eine Dosis eines Koagulations-Reagens' hinzugefügt wird, welche die schwebenden kolloidalen Stoffe destabilisiert, und welche in der Größenordnung von 30 bis 80 Mal niedriger ist als die Dosis des Koagulations-Reagens', die das Zeta-Potential auf Null reduziert.

2. Verfahren nach Anspruch 1, **dadurch gekennzeichnet, dass** die besagte Dosis in der Größenordnung von 40 bis 60 Mal niedriger ist als die Dosis des Koagulations-Reagens', die das Zeta-Potential auf Null reduziert.

## Claims

1. Method of filtration of membranes, in particular micro-, ultra-, nano-, or hyperfiltration of effluent containing matter in suspension, in particular in water, with a view to reducing the clogging of the membranes and improving the filtration capability thereof, **characterised in that** they consist of adding to the effluent, before it passes over the said membrane, a dose of a coagulation reagent destabilising the colloidal matter in suspension, which is around 1/30^{th} to 1/80^{th} of the dose of coagulation reagent cancelling out the Zeta potential.

2. Method, **characterised in that** the said dose is around 1/40^{th} to 1/60^{th} of that cancelling out the Zeta potential.
